# FASCICULE DE BREVET EUROPEEN

(11) **EP 1 064 166 B1**
(45) Date de publication et mention de la délivrance du brevet: **19.06.2002**
(21) Numéro de dépôt: 99910440.9
(22) Date de dépôt: 26.03.1999
(51) Int. Cl.: B60K 15/035, F16K 17/36

(54) **DISPOSITIF DE MISE A L'AIR LIBRE POUR UN RESERVOIR DE CARBURANT DE VEHICULE AUTOMOBILE**
ENTLÜFTUNGSVORRICHTUNG FÜR DEN KRAFTSTOFFTANK EINES KRAFTFAHRZEUGES
VENTILATING DEVICE FOR MOTOR VEHICLE FUEL TANK

(30) Priorité: 27.03.1998 FR 9804019
(43) Date de publication de la demande: 03.01.2001
(73) Titulaire: COMPAGNIE DE MATERIEL ET D'EQUIPEMENTS TECHNIQUES C.O.M.E.T., F-60304 Senlis Cedex (FR)
(72) Inventeur: ROMANEK, Christian, F-60430 Noailles (FR)
(74) Mandataire: Rinuy, Santarelli
(86) Numéro de dépôt international: FR9900710
(87) Numéro de publication internationale: WO9950086

(56) Documents cités:
- FR-A- 2 740 402
- US-A- 4 756 328

## Description

L'invention concerne un dispositif de mise à l'air libre pour un réservoir de carburant de véhicule automobile.

L'invention se rapporte plus particulièrement à un dispositif de mise à l'air libre pour un réservoir de carburant de véhicule automobile, du type dans lequel une valve est munie d'une masselotte qui est agencée dans une chambre dans laquelle débouchent un orifice d'entrée relié au réservoir et un orifice de sortie, et du type dans lequel, lorsque le véhicule est à l'arrêt en position sensiblement horizontale, la masselotte provoque, sous l'effet de son poids, l'obturation de la valve, et dans lequel, sous l'effet des vibrations engendrées lors de la mise en marche ou du roulage du véhicule, la masselotte provoque l'ouverture de la valve et la mise à l'air libre du réservoir. Un tel dispositif est connu de FR-A-2 740 402.

Dans les dispositifs connus, la masselotte est généralement réalisée sous la forme d'une bille sphérique qui roule sur une surface tronconique concave évasée vers le haut aménagée sur une paroi horizontale inférieure de la chambre de la valve. Le centre de la surface tronconique est formé par l'orifice qui est destiné à être obturé directement par la bille.

En effet, lorsque le véhicule est à l'arrêt en position sensiblement horizontale, la bille, par simple gravité, repose au centre de la surface tronconique par laquelle elle est en appui selon un cercle.

Ainsi, l'étanchéité de l'obturation réalisée par la bille est conditionnée par la bonne géométrie d'une part de la bille et, d'autre part, de la surface tronconique. En effet, en cas de défaut géométrique, le contact entre la bille et la surface tronconique ne s'effectue pas sur toute la longueur du cercle théorique de contact.

L'invention a donc pour objet de proposer une nouvelle conception d'un dispositif de mise à l'air libre qui puisse réaliser de manière simple et économique une étanchéité entre le réservoir de carburant et l'air libre.

Dans ce but, l'invention propose un dispositif de mise à l'air libre pour un réservoir de carburant de véhicule automobile, du type dans lequel une valve est munie d'une masselotte qui est agencée dans une chambre dans laquelle débouchent un orifice d'entrée relié au réservoir et un orifice de sortie, et du type dans lequel, lorsque le véhicule est à l'arrêt en position sensiblement horizontale, la masselotte provoque, sous l'effet de son poids, l'obturation de la valve, et dans lequel, sous l'effet des vibrations engendrées lors de la mise en marche ou du roulage du véhicule, la masselotte provoque l'ouverture de la valve et la mise à l'air libre du réservoir, caractérisé en ce que la masselotte est en appui sur une face supérieure concave d'une coupelle dont une face inférieure comporte des moyens d'obturation qui sont susceptibles de coopérer avec un siège formé dans un corps de valve pour obturer l'un des orifices de la valve lorsque la coupelle est maintenue dans une position d'obturation par la masselotte en position d'équilibre stable au fond de la surface concave supérieure, et en ce que, lorsque la masselotte est écartée de sa position d'équilibre stable par des vibrations, elle provoque un basculement de la coupelle de manière à interrompre la coopération des moyens d'obturation avec le siège et ainsi à provoquer l'ouverture de la valve.

Selon d'autres caractéristiques de l'invention :
- la coupelle est sensiblement de forme conique et d'axe vertical ;
- la face inférieure de la coupelle comporte une portée annulaire plane qui, en position d'obturation de la coupelle, coopère avec un siège annulaire formé autour de l'un des orifices qui est aménagé dans une paroi horizontale inférieure de la chambre ;
- le siège est surélevé par rapport à une face supérieure de la paroi inférieure de la chambre ;
- le siège est formé par l'intersection d'une surface cylindrique interne verticale, qui délimite l'orifice à obturer, avec une surface tronconique convexe qui est tournée vers le haut, qui est coaxiale à la surface cylindrique, et qui s'étend au-dessus de la face supérieure de la paroi inférieure de la chambre ;
- la coupelle comporte un centreur qui s'étend vers le bas au travers de l'orifice à obturer et qui, au moins lorsque la coupelle est en position d'obturation, coopère avec un bord de l'orifice pour centrer la coupelle ;
- le centreur s'étend au centre de la portée annulaire ;
- la chambre comporte des moyens de butée qui limitent l'angle de basculement de la coupelle.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe par un plan vertical d'un dispositif de mise à l'air libre selon l'invention, représenté lorsque le véhicule est à l'arrêt en position sensiblement horizontale ; et
- la figure 2 est une vue similaire à celle de la figure 1 illustrant le dispositif lorsque le véhicule est en cours de roulage.

De manière connue, ainsi que cela est décrit par exemple dans le document FR-A-2.740.402, les réservoirs de carburant de véhicule automobile sont généralement pourvus d'un dispositif de mise à l'air libre qui comporte notamment une canalisation de mise à l'air libre dont une portion inférieure débouche dans le réservoir, au niveau d'un point haut de celui-ci, et dont une portion supérieure est par exemple reliée à un dispositif de récupération et de filtrage des vapeurs. Une valve est interposée entre les portions inférieure et supérieure de la canalisation de mise à l'air libre.

Le dispositif de mise à l'air libre permet de compenser la baisse du niveau de carburant dans le réservoir en permettant l'admission d'air à l'intérieur du réservoir afin que la pression régnant dans celui-ci soit sensiblement constante.

Au contraire, afin d'éviter toute déformation du réservoir susceptible d'entraîner sa rupture, ce dispositif doit également permettre l'évacuation des gaz qui seraient par exemple comprimés à cause d'une élévation de température.

Toutefois, il est souhaitable que, lorsque le véhicule est à l'arrêt, les vapeurs contenues dans le réservoir ne puissent pas s'échapper directement à l'air libre, que ce soit par simple évaporation ou sous l'effet du remplissage du réservoir lors d'une opération de ravitaillement en carburant.

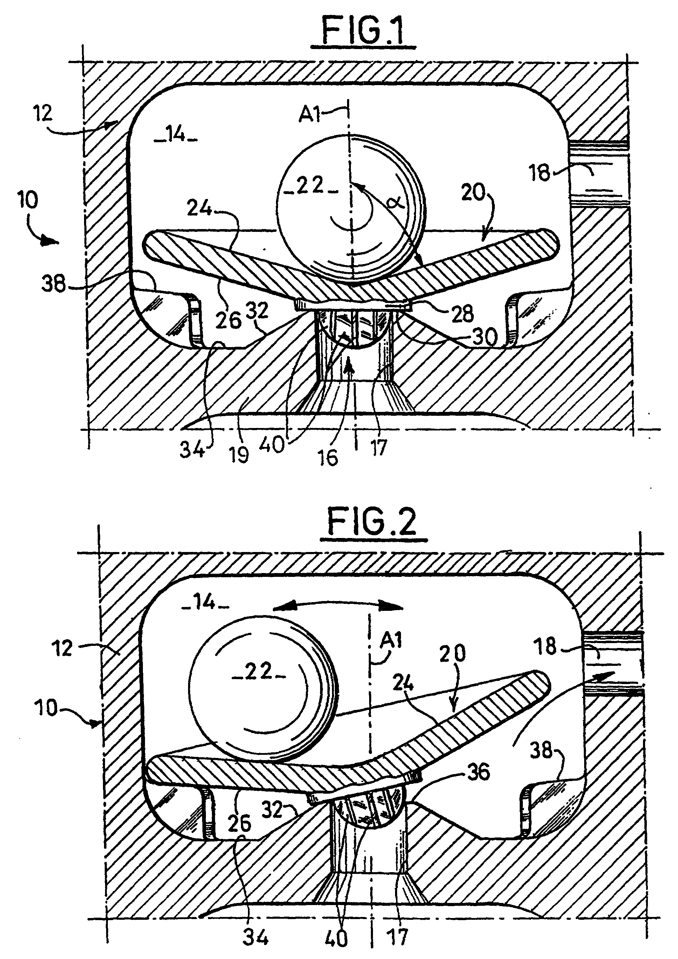

Le dispositif de mise à l'air libre 10 qui est illustré sur les figures 1 et 2 de manière partielle comporte donc une valve 12 permettant de réaliser une telle obturation du circuit de mise à l'air libre lorsque le véhicule est à l'arrêt.

La valve 12 comporte une chambre 14 qui est pourvue d'au moins un orifice d'entrée 16 et un orifice de sortie 18. L'orifice d'entrée 16, qui est aménagé au travers d'une paroi horizontale inférieure 19 qui délimite la chambre 14, est délimité par une surface cylindrique interne 17 d'axe A1 et il est par exemple relié au réservoir de carburant. L'orifice de sortie 18 débouche quant à lui par exemple dans une paroi latérale de la chambre 14 ou dans une paroi supérieure de celle-ci.

Conformément aux enseignements de l'invention, l'orifice de sortie 16 est destiné à être obturé par une coupelle 20 qui est susceptible de basculer entre une position d'obturation, illustrée à la figure 1, et une position d'ouverture, illustrée à la figure 2, sous l'action d'une masselotte ou bille 22 qui est en appui, sous l'effet de son poids, sur une face supérieure 24 de la coupelle 20.

La coupelle 20 présente sensiblement une forme conique de révolution d'axe A1 lorsque l'ensemble occupe sa position d'obturation illustrée à la figure 1.

La face supérieure 24 de la coupelle 20 est donc conique concave, évasée vers le haut selon un demi-angle au sommet α. La face inférieure 26 de la coupelle 20 est sensiblement parallèle à la face supérieure 24 de sorte que la coupelle 20 présente sensiblement la forme d'une plaque conique d'épaisseur constante. Toutefois, la face inférieure 26 porte, en son centre, un bossage 28 dont une face inférieure 30 est plane et horizontale de manière à former une portée.

La paroi inférieure 19 de la valve 12 présente, sensiblement en son centre, une surface tronconique 32, d'axe A1, qui est convexe, évasée vers le bas et en relief par rapport à la face supérieure 34 de la paroi 18.

Au débouché de l'orifice 16 dans la chambre 14, l'intersection de la surface cylindrique 17 avec la surface tronconique 32 de la paroi inférieure 18 forme un siège 36 sur lequel est destinée à venir s'appuyer la surface intérieure 30 de portée de la coupelle 20. On remarque que le siège 36, formé à l'intersection de deux surfaces qui présentent entre elles un angle aigu, peut se présenter soit sous la forme d'une lèvre circulaire, soit sous la forme d'un chanfrein annulaire d'axe A1.

Le contact entre le siège 36 et la portée 30 s'effectue donc soit selon un cercle, soit selon un anneau.

Ainsi que cela ressort des figures, le diamètre de ces deux surfaces de contact est très inférieur à la dimension transversale de la chambre 14 et de la coupelle 20. De la sorte, si la masselotte 22 est écartée de sa position d'équilibre stable, c'est-à-dire si elle est déplacée radialement vers l'extérieur par rapport à l'axe A1 de la surface supérieure 24 d'une distance supérieure au rayon des surfaces de contact 30, 36, le poids de la bille 22, très supérieur à celui de la coupelle 20, tend à faire basculer cette dernière vers une position d'ouverture qui est illustrée à la figure 2 dans laquelle la surface de portée 30 est décollée du siège 36 sauf en un point. La circulation des gaz à travers la valve 12, vers l'extérieur ou l'intérieur du réservoir, est alors libre.

Comme on peut le voir, il est prévu dans la chambre 14 des butées 38 qui s'élèvent depuis la face supérieure 34 de la paroi inférieure 18 de la chambre 14 de manière à limiter l'angle de basculement de la coupelle 20. Dans l'exemple de réalisation illustré sur les figures, les butées 38 sont destinées à coopérer avec le bord radial externe de la coupelle 20 et elles sont agencées à un niveau supérieur au niveau du siège 36. Plus précisément, les butées 38 sont agencées de telle manière que, lorsque la coupelle 20 est en position d'ouverture, le rayon de la surface supérieure 24 de celle-ci qui présente la plus faible pente présente malgré tout une pente suffisante selon la direction centripète pour que la masselotte 32 tende de nouveau à regagner le centre de la surface supérieure 24.

Par ailleurs, la coupelle 20 est pourvue de moyens de centrage qui permettent de la maintenir sensiblement centrée selon l'axe A1 afin que, lorsque la masselotte 22 est reçue au centre de la face supérieure 24, l'action de la masselotte 22 sur la coupelle 20 la ramène obligatoirement dans sa position d'obturation illustrée à la figure 1. En effet, la poussée exercée par le poids de la masselotte 22 sur la coupelle 20 doit alors être agencée de manière à être à l'intérieur du cercle défini par le siège 36.

Dans l'exemple de réalisation illustré sur les figures, les moyens de centrage sont constitués par une série d'ailettes 40 qui s'étendent en relief vers le bas depuis la surface inférieure 30, au centre de celle-ci. Les ailettes 40 sont agencées selon un réseau de plans verticaux perpendiculaires entre eux, les ailettes 40 étant par ailleurs entièrement comprises à l'intérieur d'une surface théorique d'enveloppe centrée sur l'axe A1.

Le diamètre de l'enveloppe sphérique est sensiblement égal à celui de la surface cylindrique interne 17 délimitant l'orifice 16 de sorte que, lorsque la coupelle 20 est en position d'obturation, les ailettes 40 assurent un centrage parfait de la coupelle 20 selon l'axe A1. Par ailleurs, on voit que, lorsque la coupelle 20 est en position d'ouverture, les ailettes 40 restent au moins en partie engagées à l'intérieur de l'orifice 16 mais, ne présentant pas une surface continue, elles ne peuvent s'opposer au libre passage des gaz au travers de l'orifice 16 qui peuvent ainsi s'évacuer depuis le réservoir vers l'extérieur.

De préférence, la surface latérale qui délimite la chambre 14 présente, en section selon un plan transversal perpendiculaire à l'axe A1, un profil correspondant à celui du bord périphérique externe de la coupelle 20.

La masselotte 22 présente de préférence une forme sensiblement sphérique mais, contrairement au dispositif selon l'art antérieur, il n'est pas nécessaire que cette sphère soit géométriquement parfaite.

En effet, l'étanchéité de la valve 12 est déterminée par le contact entre le siège 36 et ta surface de portée 30 de la coupelle 20. Ces pièces, par exemple réalisées en moulage en matière plastique, peuvent avoir très facilement une géométrie suffisante pour assurer une très bonne étanchéité.

De plus, on pourra réaliser la coupelle 20 en un matériau caoutchouteux pour d'une part parfaire l'étanchéité du contact avec le siège et, d'autre part, diminuer considérablement les bruits susceptibles d'être provoqués par les basculements successifs de la coupelle. Éventuellement, la coupelle 20 peut être également réalisée en un matériau rigide revêtu, intégralement ou partiellement, d'un matériau caoutchouteux.

Bien entendu, la conception des moyens d'obturation de la valve 12 qui vient d'être décrite peut être utilisée dans des dispositifs de mise à l'air libre incorporant par ailleurs d'autres fonctions. Notamment, cette conception peut être utilisée dans les dispositifs de mise à l'air libre dans lesquels la masselotte 22 a en outre pour fonction de refermer un pointeau en cas de retournement du véhicule.

## Revendications

1. Dispositif de mise à l'air libre pour un réservoir de carburant de véhicule automobile, du type dans lequel une valve (12) est munie d'une masselotte (22) qui est agencée dans une chambre (14) dans laquelle débouchent un orifice d'entrée (16) relié au réservoir et un orifice de sortie (18), et du type dans lequel, lorsque le véhicule est à l'arrêt en position sensiblement horizontale, la masselotte (22) provoque, sous l'effet de son poids, l'obturation de la valve (12), et dans lequel, sous l'effet des vibrations engendrées lors de la mise en marche ou du roulage du véhicule, la masselotte (22) provoque l'ouverture de la valve (12) et la mise à l'air libre du réservoir,
**caractérisé en ce que** la masselotte (22) est en appui sur une face supérieure concave (24) d'une coupelle (20) dont une face inférieure (26) comporte des moyens d'obturation (30) qui sont susceptibles de coopérer avec un siège (36) formé dans un corps de valve pour obturer l'un (16) des orifices de la valve (12) lorsque la coupelle (20) est maintenue dans une position d'obturation par la masselotte (22) en position d'équilibré stable au fond de la surface concave supérieure (24), et **en ce que**, lorsque la masselotte (22) est écartée de sa position d'équilibre stable par des vibrations, elle provoque un basculement de la coupelle (20) de manière à interrompre la coopération des moyens d'obturation (30) avec le siège (36) et ainsi à provoquer l'ouverture de la valve (12).

2. Dispositif de mise à l'air libre selon la revendication 1, **caractérisé en ce que** la coupelle (20) est sensiblement de forme conique et d'axe vertical (A1).

3. Dispositif de mise à l'air libre selon la revendication 2, **caractérisé en ce que** la face inférieure (26) de la coupelle (20) comporte une portée annulaire plane (30) qui, en position d'obturation de la coupelle, coopère avec un siège annulaire (36) formé autour de l'un des orifices (16) qui est aménagé dans une paroi horizontale inférieure (19) de la chambre (14).

4. Dispositif de mise à l'air libre selon la revendication 3, **caractérisé en ce que** le siège (36) est surélevé par rapport à une face supérieure (34) de la paroi inférieure (19) de la chambre (14).

5. Dispositif de mise à l'air libre selon la revendication 4, **caractérisé en ce que** le siège (36) est formé par l'intersection d'une surface cylindrique interne verticale (17), qui délimite l'orifice (16) à obturer, avec une surface tronconique convexe (32) qui est tournée vers le haut, qui est coaxiale à la surface cylindrique (17), et qui s'étend au-dessus de la face supérieure (34) de la paroi inférieure (19) de la chambre (14).

6. Dispositif de mise à l'air libre selon l'une quelconque des revendications précédentes, **caractérisé en ce que** la coupelle (20) comporte un centreur (40) qui s'étend vers le bas au travers de l'orifice à obturer (16) et qui, au moins lorsque la coupelle (20) est en position d'obturation, coopère avec un bord de l'orifice (16) pour centrer la coupelle (20).

7. Dispositif de mise à l'air libre selon la revendication 6 prise en combinaison avec la revendication 3, **caractérisé en ce que** le centreur (40) s'étend au centre de la portée annulaire (30).

8. Dispositif de mise à l'air libre selon l'une quelconque des revendications précédentes, **caractérisé en ce que** la chambre (14) comporte des moyens de butée (38) qui limitent l'angle de basculement de la coupelle (20).

## Patentansprüche

1. Entlüftungsvorrichtung für den Kraftstofftank eines Kraftfahrzeuges, bei der ein Ventil (12) mit einem in einer Kammer (14), in die eine mit dem Tank verbundene Zuführöffnung und eine Austrittsöffnung einmündet, angeordneten Reguliergewicht (22) ausgerüstet ist und bei der das Reguliergewicht (22), sobald das Fahrzeug in im wesentlichen horizontaler Stellung stillsteht, unter der Wirkung seines Gewichts das Ventil (12) verschließt und beim Anfahren und Rollen des Fahrzeugs aufgrund der erzeugten Schwingungen die Öffnung des Ventils (34) und die Lüftung des Tanks (10) hervorruft, **dadurch gekennzeichnet, daß** das Reguliergewicht (22) auf einer konkaven Oberseite (24) einer Schale (20) aufliegt, dessen eine Unterseite (26) Verschlußmittel (30), aufweist, die mit einem in einem Ventilkörper befindlichen Sitz (36) zusammenwirken können, der zum Verschließen einer (16) der Öffnungen des Ventils (12) durch das Reguliergewicht (22) in dem Ventilkörper ausgebildet ist, sobald die Schale (20) durch das sich in stabilem Gleichgewicht am Boden der konkaven Oberseite (24) befindliche Reguliergewicht (22) in Schließposition gehalten wird, und **dadurch gekennzeichnet, daß**, sobald das Reguliergewicht (22) aus seiner stabilen Gleichgewichtsposition durch Schwingungen entfernt wird, ein Kippen der Schale (20) hervorgerufen wird, so daß das Zusammenwirken der Verschlußmittel (30) mit dem Sitz (36) unterbrochen und die Öffnung der Ventils (12) bewirkt wird.

2. Entlüftungsvorrichtung nach Anspruch 1, **dadurch gekennzeichnet, daß** die Schale (20) im wesentlichen eine konische Form mit axialer Achse (A1) aufweist.

3. Entlüftungsvorrichtung nach Anspruch 2, **dadurch gekennzeichnet, daß** die Unterseite (26) der Schale (20) eine ringförmige ebene Auflagefläche (30) aufweist, die in Schließstellung der Schale mit einem ringförmigen Sitz (36) zusammenwirkt, der um eine der in der unteren horizontalen Wand (19) der Kammer (14) angeordneten Öffnungen (16) ausgebildet ist.

4. Entlüftungsvorrichtung nach Anspruch 3, **dadurch gekennzeichnet, daß** der Sitz (36) in Bezug auf eine Oberseite (34) der unteren Wand (19) der Kammer (14) emporgehoben ist .

5. Entlüftungsvorrichtung nach Anspruch 4, **dadurch gekennzeichnet, daß** der Sitz (36) durch den Schnitt einer zylindrischen, vertikalen, die zu verschließende Öffnung (16) abgrenzende Innenfläche (37) mit einer konvexen kegelstumpfartigen nach oben gerichteten Fläche (32), welche koaxial zur zylindrischen Fläche (17) verläuft und sich oberhalb der Oberseite (34) der Innenwand (19) der Kammer (14) erstreckt, gebildet wird.

6. Entlüftungsvorrichtung nach irgendeinem der vorangehenden Ansprüche, **dadurch gekennzeichnet, daß** die Schale (20) einen Zentrierer (40) aufweist, der sich nach unten durch die zu verschließende Öffnung (16) erstreckt und der, zumindest wenn die Schale (20) sich in Schließposition befindet, mit einem Rand der Öffnung (16) zusammenwirkt, um die Schale (20) zu zentrieren.

7. Entlüftungsvorrichtung nach Anspruch 6 kombiniert mit dem Anspruch 3, **dadurch gekennzeichnet, daß** der Zentrierer (40) sich zum Zentrum der ringförmigen Auflagefläche (30) erstreckt.

8. Entlüftungsvorrichtung nach irgendeinem der vorangehenden Ansprüche, **dadurch gekennzeichnet, daß** die Kammer (14) Anschlagmittel (38) aufweist, welche den Kippwinkel der Schale (20) begrenzen.

## Claims

1. Device for communication with the open air for a motor vehicle fuel tank, of the type in which a valve (12) is provided with a weight (22) which is arranged in a chamber (14) into which open an intake orifice (16) connected to the tank and an outlet orifice (18), and of the type in which, when the vehicle is stationery in a substantially horizontal position, the weight (22) causes, under the influence of its weight, the closure of the valve (12), and in which, under the influence of the vibrations generated on travel or running of the vehicle, the weight (22) causes the opening of the valve (12) and the communication of the tank with the open air,
**characterised by** the fact that the weight (22) bears on an upper concave surface (24) of a cup (20), a lower face (26) of which includes obturating means (30) which are able to co-operate with a seat (36) formed in a valve body to close one (16) of the orifices of the valve (12) when the cup (20) is kept in an obturating position by the weight (22) in a position of stable equilibrium at the bottom of the upper concave surface (24), and by the fact that, when the weight (22) is moved away from its stable equilibrium position by vibrations, it causes tilting of the cup (20) so as to interrupt the cooperation of the obturating means (30) with the seat (36) and thus cause opening of the valve (12).

2. Device for communication with the open air as described in claim 1, **characterised by** the fact that the cup (20) is substantially of conical form and vertical axis (A1).

3. Device for communication with the open air as described in claim 2, **characterised by** the fact that the lower face (26) of the cup (20) includes a flat annular bearing surface (30) which, in the obturating position of the cup, co-operates with an annular seat (36) formed around one of the orifices (16) which is arranged in a lower horizontal wall (19) of the chamber (14).

4. Device for communication with the open air as described in claim 3, **characterised by** the fact that the seat (36) is raised relative to an upper face (34) of the lower wall (19) of the chamber (14).

5. Device for communication with the open air as described in claim 4, **characterised by** the fact that the seat (36) is formed by the intersection of a vertical internal cylindrical surface (17) which defines the orifice (16) to be closed, with a convex surface in the form of a truncated cone (32) which is turned upwardly, which is co-axial with the cylindrical surface (17), and which extends above the upper face (34) of the lower wall (19) of the chamber (14).

6. Device for communication with the open air as described in any one of the preceding claims, **characterised by** the fact that the cup (20) includes a centring means (40) which extends downwardly through the orifice to be closed (16) and which, at least when the cup (20) is in the obturating position, co-operates with an edge of the orifice (16) to centre the cup (20).

7. Device for communication with the open air as described in claim 6, taken in combination with claim 3 **characterised by** the fact that the centring means (40) extends at the centre of the annular bearing surface (30).

8. Device for communication with the open air as described in any one of the preceding claims, **characterised by** the fact that the chamber (14) includes stop means (38) which limit the angle of tilt of the cup (20).
